# EUROPÄISCHE PATENTSCHRIFT

(11) **EP 1 273 484 B1**
(45) Veröffentlichungstag und Bekanntmachung des Hinweises auf die Patenterteilung: **14.12.2005**
(21) Anmeldenummer: 02011127.4
(22) Anmeldetag: 18.05.2002
(51) Int. Cl.: B60R 21/13

(54) **Überrollschutzsystem für Kraftfahrzeuge**
Roll bar protection system for motor vehicles
Système d'arceau de sécurité pour véhicules

(30) Priorität: 04.07.2001 DE 10132421
(43) Veröffentlichungstag der Anmeldung: 08.01.2003
(73) Patentinhaber: ISE Innomotive Systems Europe GmbH, 51702 Bergneustadt (DE)
(72) Erfinder: Nass, Michael, 51702 Bergneustadt (DE); Zupancic, Manuela, 51702 Bergneustadt (DE); Nowack, Reinhard, 57489 Drolshagen (DE); Menne, Hans-Gerd, 51702 Bergneustadt (DE); Alliger, Michael, 85080 Gaimersheim (DE); Backhaus, Hans-Gerd, 85055 Ingolstadt (DE); Ablassmeier, Willibald, 85131 Pollenfeld (DE)
(74) Vertreter: Fuchs Mehler Weiss & Fritzsche

(56) Entgegenhaltungen:
- EP-A- 1 067 026
- DE-A- 19 523 790
- DE-C- 19 838 989
- US-A- 5 890 738

## Beschreibung

Die Erfindung bezieht sich auf ein Überrollschutzsystem, mit
- einem Überrollkörper, der in einem fahrzeugfesten Führungskörper geführt aufgenommen ist, und der im Normalzustand gegen die Kraft von mindestens einer vorgespannten Antriebs-Druckfeder durch eine Haltevorrichtung in einer unteren, eingefahrenen Ruhelage haltbar ist, und unter Lösen der Haltevorrichtung durch die Federkraft der Antriebs-Druckfeder in eine obere, schützende Stellung bringbar ist, und mit
- einer Verriegelungseinrichtung für das Verriegeln des ausgefahrenen Überrollkörpers gegen ein ungewolltes Wiedereinfahren, bestehend aus zwei Verriegelungskomponenten, von denen eine fahrzeugfest angebracht und die andere mit dem Überrollkörper verbunden ist, und die Rastelemente besitzen, die in der ausgefahrenen Stellung des Überrollkörpers im verriegelnden Wirkeingriff stehen.

Derartige Überrollschutzsysteme dienen zum Schutz der Insassen in Kraftfahrzeugen ohne schützendes Dach, typischerweise in Cabriolets oder Sportwagen.

Es ist dabei bekannt, einen die gesamte Fahrzeugbreite überspannenden, fest installierten Überrollbügel vorzusehen oder jedem Fahrzeugsitz einen höhenunveränderlich fest installierten Überrollbügel zuzuordnen.

Bei beiden Lösungen wird der erhöhte Luftwiderstand und das Auftreten von Fahrgeräuschen als nachteilig empfunden, abgesehen von der Beeinträchtigung des Fahrzeugaussehens.

Am Markt setzen sich daher immer mehr konstruktive Lösungen durch, bei denen der Überrollbügel im Normalzustand eingefahren ist, und im Gefahrenfall, also bei einem drohenden Überschlag, schnell in eine schützende Position ausgefahren wird, um zu verhindern, daß die Fahrzeuginsassen durch das sich überschlagende Fahrzeug erdrückt werden.

Diese Lösungen weisen typischerweise einen in einem fahrzeugfesten Führungskörper geführten U-förmigen oder aus einem Profilkörper gebildeten Überrollkörper, auf, wobei der Führungskörper in einem Kassetten-Gehäuse befestigt ist. Dieser Überrollkörper wird im Normalzustand gegen die Vorspannkraft einer Antriebs-Druckfeder durch eine Haltevorrichtung in einer unteren Ruhelage gehalten, und ist im Überschlagfall sensorgesteuert unter Lösen der Haltevorrichtung, durch die Federkraft in eine obere, schützende Stellung bringbar, wobei eine dann in Wirkeingriff tretende Verriegelungseinrichtung ein Eindrücken des Überrollbügels verhindert.
Dabei ist jedem Fahrzeugsitz eine Kassette zugeordnet.
Die Haltevorrichtung besitzt dabei typischerweise ein am Überrollkörper befestigtes Halteglied, das in lösbarer mechanischer Wirkverbindung mit einem Auslöseglied an einem sensorgesteuerten Auslösesystem steht, das typischerweise durch einen Auslösemagneten, den sogenannten Crashmagneten, oder durch ein pyrotechnisches Auslöseglied, gebildet ist.
Die Verriegelungseinrichtung besteht typischerweise aus einer schwenkbar angelenkten, federvorgespannten Rastklinke mit Zahnsegmenten und einer feststehenden Zahnleiste, einem Rastdorn oder dergleichen, wobei ein Verriegelungs-Element mit dem Überrollbügel und das andere fahrzeugfest verbunden ist.

Eine derartige Kassetten-Konstruktion eines Überrollbügelschutzsystems mit einem U-förmigen Überrollbügel zeigt beispielsweise die DE 43 42 400 A 1; eine alternative Kassettenkonstruktion mit einem Überrollkörper in Form eines Profilkörpers zeigen insbesondere die DE 195 23 790 C1 und DE 198 38 989 C1.

Das bekannte Überrollschutzsystem nach der DE 43 42 400 A1 weist ein Gehäuse in Form einer einseitig offenen, U-förmigen Kassette auf, mit zwei Seitenwänden, die auf der offenen Seite der Kassette jeweils einen nach außen abgekanteten Winkelbabschnitt zur fahrzeugfesten Befestigung der Kassette besitzen, an denen weiterhin ein Bodenblech befestigt ist, und die schließlich frontseitig über eine Deckwand miteinander verbunden sind. Das Überrollschutzsystem besitzt weiterhin einen U-förmigen Überrollbügel bestehend aus einem gekrümmten Abschnitt und zwei parallelen Schenkelrohren, die jeweils eine geschlossene Mantelfläche besitzen, und deren offene Enden über ein traversenartiges, versteifendes Verbindungselement miteinander verbunden sind.
Das System weist ferner zwei mit einem Ende am Gehäuseboden angebrachte, im Innern jeweils eine Druckfeder für den alleinigen Antrieb des Überrollbügels aufnehmende, Standrohre, die jeweils von einem Schenkelrohr koaxial umgriffen sind und ebenfalls eine geschlossene Mantelfläche aufweisen sowie einen am oberen Ende des Gehäuses flächig an den Seitenwänden der Kassette angebrachten Führungsblock auf, der Führungsöffnungen zur zusätzlichen äußeren Führung der Schenkelrohre besitzt.

Das bekannte alternative Überrollschutzsystem nach der DE 198 38 989 C1 besitzt einen Überrollkörper, ausgebildet als biegeversteifter Kastenprofil-Bügelkörper, der sich über die gesamte Bügelbreite erstreckt, und der in einem fahrzeugfesten, die Kassette bildenden kastenartigen Grundprofil, dem Profil-Führungskörper, geführt ist. Im Fall der ähnlich gelagerten

DE 195 23 790 C1, die ein Überollschutzsystem nach dem Oberbegriff des Anspruchs 1 zeigt besteht der Überrollbügel aus einem brillenartigen Profil-Bügelkörper; der in einem fahrzeugfesten Profil-Führungskörper, der sich nur über einen Teilbereich des Bügel-Profilkörpers erstreckt, geführt ist. Bei beiden Konstruktionen ist jeweils eine Zahnleiste, die an dem Profil-Bügelkörper angeschraubt ist, und eine am Profil-Führungskörper drehbar angelenkte Zahnklinke, als Verriegelungseinrichtung vorgesehen.

Bei einem Überschlag müssen der Überrollkörper, der Profilführungskörper und dessen Befestigung im Fahrzeug sowie die Verriegelungseinrichtung und ihre Befestigung, die insbesondere in Bügel-Verfahrrichtung stoßartig auftretende Last aufnehmen. Die hierbei auftretenden Kräfte können in Abhängigkeit von Geschwindigkeit und Masse des Fahrzeuges, sowie Aufschlagwinkel und Beschaffenheit der Aufschlagfläche nach neuesten Erkenntnissen ausnahmsweise eine Belastung von mindestens 10 Tonnen betragen, wobei die typischerweise auftretende Grundlast, auf die die Systeme typischerweise ausgelegt sind, 6 - 6,5 Tonnen beträgt.

Um entsprechend den Forderungen aus der Automobilindustrie derartig hohe Kräfte aufnehmen zu können, ist man den Weg gegangen, das Überrollschutzsystem als verstärktes, starres System auszubilden. Dabei wurden der Überrollkörper, der Führungskörper und seine Befestigung am Fahrzeug so ausgelegt, daß sie bis zu möglichst hohen Lasten ein nichtdeformierbares, starres System bilden. Ferner wurden die Verriegelungsbauteile und deren Befestigungsmittel, d.h. die Dimensionierung der Zahnstangen und deren Befestigungsschrauben bzw. konkret die formschlüssige Aufnahme im Überrollkörper sowie die Klinke und der Bolzen, mit der sie im Führungskörper angelenkt ist, einschließlich des Lagers des Bolzens im Führungskörper, auf die sehr hohe Belastung ausgelegt.

Dieser Weg
- erwies sich jedoch wirtschaftlich als nicht sinnvoll, weil insbesondere ein hoher Material-Aufwand betrieben werden müßte,
- benötigt einen entsprechend größeren Bauraum für die verstärkten Elemente, der in der Regel nicht zur Verfügung steht, so daß der Lastaufnahme Grenzen gesetzt waren, und
- birgt die Gefahr in sich, daß die Elemente der Wiedereinfahrsperre schlagartig zerstört werden und dadurch die Wiedereinfahrsperre ihre Schutzfunktion total verliert.

Macht man andererseits das System Überrollkörper-Führungskörper weniger starr, kann es sich beim Auftreten höherer Kräfte deformieren. Dieses Deformieren kann dabei, da es nicht gezielt erfolgt, den Überrollkörper so verformen, daß er nicht mehr eingefahren werden kann oder im ungünstigsten Fall sogar seine Schutzfunktion zumindest teilweise verlieren kann.

Der Erfindung liegt die Aufgabe zugrunde, das eingangs bezeichnete Überrollschutzsystem so auszubilden, daß auch die bei einem Überschlag auf den Überrollkörper auftretenden Spitzenkräfte bei tragbaren Baumaßen der Last aufnehmenden Elemente so aufgefangen werden können, daß die Überroll-Schutzfunktion erhalten bleibt.

Die Lösung dieser Aufgabe gelingt ausgehend von
- einem Überrollkörper, der in einer fahrzeugfesten Führungseinheit geführt aufgenommen ist, und der im Normalzustand gegen die Kraft von mindestens einer vorgespannten Antriebs-Druckfeder durch eine Haltevorrichtung in einer unteren, eingefahrenen Ruhelage haltbar ist, und unter Lösen der Haltevorrichtung durch die Federkraft der Antriebs-Druckfeder in eine obere, schützende Stellung bringbar ist, und mit
- einer Verriegelungseinrichtung für das Verriegeln des ausgefahrenen Überrollkörpers gegen ein ungewolltes Wiedereinfahren, bestehend aus zwei Verriegelungskomponenten, von denen eine fahrzeugfest angebracht und die andere mit dem Überrollkörper verbunden ist, und die Rastelemente besitzen, die in der ausgefahrenen Stellung des Überrollkörpers im verriegelnden Wirkeingriff stehen,
gemäß der Erfindung dadurch, daß der Überrollkörper, der zugeordnete Führungskörper und dessen Befestigung am Fahrzeug, bezogen auf die bei einem Überschlag auftretende Maximallast als starres System ausgebildet sind, und mindestens eine Verriegelungskomponente und/oder deren Befestigung am Überroll- bzw. Führungskörper als definierte Soll-Deformationsstelle für einen begrenzten definierten Deformationsweg in Verfahrrichtung des Überrollkörpers zum Energieabbau ausgebildet ist.

Durch das starre System Überrollkörper-Führungskörper wird eine ungerichtete Deformation dieses Systems und damit ein totaler Funktionsverlust vermieden. Das Vorsehen der Soll-Deformationsstelle ermöglicht es, die Verriegelungskomponenten mit konstruktiv verarbeitbaren Baumaßnahmen auszulegen und verhindert vor allem, daß die Wiedereinfahrsperre schlagartig bis zum Totalverlust ihrer Funktion zerstört wird. Da die Deformation nur über einen begrenzten Weg in Verfahrrichtung erfolgen kann, bleibt die Schutzfunktion der Wiedereinfahrsperre in jedem Fall erhalten.

Die Soll-Deformationsstelle kann auf verschiedene Weise realisiert werden, beispielsweise durch eine entsprechend gestaltete Knautschzone.

Eine besonders einfache konstruktive Möglichkeit für einen definierten Deformationsweg ist gegeben, wenn gemäß einer Ausgestaltung der Erfindung die Verriegelungskomponente und/oder deren Befestigung so ausgebildet sind, daß bei Auftreten einer vorgegebenen Last eine schneidende Materialverformung über einen vorgegebenen Weg erfolgt. Der Einschneidvorgang ermöglicht eine gezielte, längenbegrenzte Deformation zum Energieabbau.

Im Prinzip kann jede der Verriegelungskomponenten als Soll-Deformationsstelle ausgebildet werden. Es hat sich jedoch als zweckmäßig erwiesen, wenn ausgehend von einer Verriegelungseinrichtung in Form eines mit zahnförmigen Rastelementen versehenen, sich in Verfahrrichtung erstreckenden, länglichen Zahnleisten-Elementes als eine der Verriegelungskomponenten gemäß einer Ausgestaltung der Erfindung das Zahnleisten-Element und/oder seine Befestigung im Überrollsystem als Soll-Deformationsstelle ausgebildet sind. Eine derartige Konstruktion ermöglicht auf einfache Weise den angestrebten Schneidvorgang für den Energieabbau.

Für die Ausbildung und Anbringung des Zahnleistenelementes bieten sich zwei Alternativen an. Eine erste Möglichkeit ist dadurch gekennzeichnet, daß das Zahnleistenelement als separate Zahnstange ausgebildet ist, die mit mindestens zwei Schraubverbindungen am Überrollkörper befestigt ist und zusätzlich mit einem zapfenförmigen Fortsatz formschlüssig in einer entsprechenden Öffnung am Überrollkörper gehaltert ist.

Besondere Vorteile sind gegeben durch ein Überrollschutzsystem, bei dem der Überrollkörper aus einem Profil-Körper besteht und eine Wandung aufweist, an der die Zahnstange befestigt ist und welche die Öffnung zur Aufnahme des zapfenförmigen Fortsatzes aufweist, wobei die Wandung und der Zapfen so ausgelegt sind, daß beim Auftreten einer vorgegebenen Last unter Wirkung des Selbstschließmomentes der anderen Verriegelungskomponente der Zapfen als Schneidwerkzeug die Wandung für einen vorgegebenen Weg schneidet. Diese Ausgestaltung erlaubt auf besonders einfache Weise einen definierten Schneidvorgang und damit einen entsprechenden Energieabbau.

Eine andere Alternative ist gegeben, wenn das Zahnleistenelement als Zahnleiste ausgebildet ist, die einstückig am Überrollkörper angeformt ist, wobei die Zahnleiste und die integrale Schnittfläche am Überrollkörper so ausgebildet sind, daß beim Auftreten einer vorgegebenen Last die Zähne und die Schnittstelle durch die zweite Verriegelungskomponente geschnitten werden. Auch diese Alternative erlaubt einen gezielten Energieabbau über einen gezielten Schneidvorgang am Überrollkörper.

Für die konstruktive Gestaltung der Begrenzung des Schneidvorganges sind verschiedene Möglichkeiten gegeben. Im einfachsten Fall ist das Überrollschutzsystem so ausgebildet, daß im Befestigungsbereich der Zahnstange bzw. der Zahnleiste eine progressiv ansteigende Wandstärke am Überrollkörper vorgesehen ist.

Weitere Ausgestaltungen der Erfindung ergeben sich anhand der Beschreibung von in den Zeichnungen dargestellten Ausführungsbeispielen.

Es zeigen:
- Fig. 1: in einer schematischen Längsschnitt-Darstellung ein Überrollschutzsystem mit einem Überrollkörper in Form eines kastenartigen Profilkörpers, der in einem fahrzeugfesten Profilkörper geführt ist mit einer Verriegelungseinrichtung in Form einer Zahnstange und einer Zahnklinke, wobei die Zahnstange und ihre Befestigung als Soll-Deformationsstelle ausgebildet ist,
- Fig. 2: eine Querschnittsansicht des Überrollschutzsystems nach Fig. 1 entlang des Schnittes A-A,
- Fig. 3: in einer vergrößerten Ausschnitt-Darstellung die Befestigung der Zahnstange an einer Wandung des den Überrollkörper bildenden Profilkörpers,
- Fig. 4: den Zustand der Lage der Zahnstange nach Auftreten einer Spitzenlast unter Darstellung des Einschneidvorganges,
- Fig. 5: eine alternative Ausführungsform zur Fig. 1 mit einer Zahnleiste, die integral mit dem Überrollkörper verbunden ist, anstelle einer separat angebrachten Zahnstange,
- Fig. 6: in einer Querschnitts-Darstellung eine Schnittansicht entlang der Schnittlinie B-B in Fig. 5, und
- Fig. 7: in einer Querschnitts-Darstellung auf der Basis der Ausführung nach Fig. 1 eine konstruktive Möglichkeit zur Begrenzung des Einschneidvorganges.

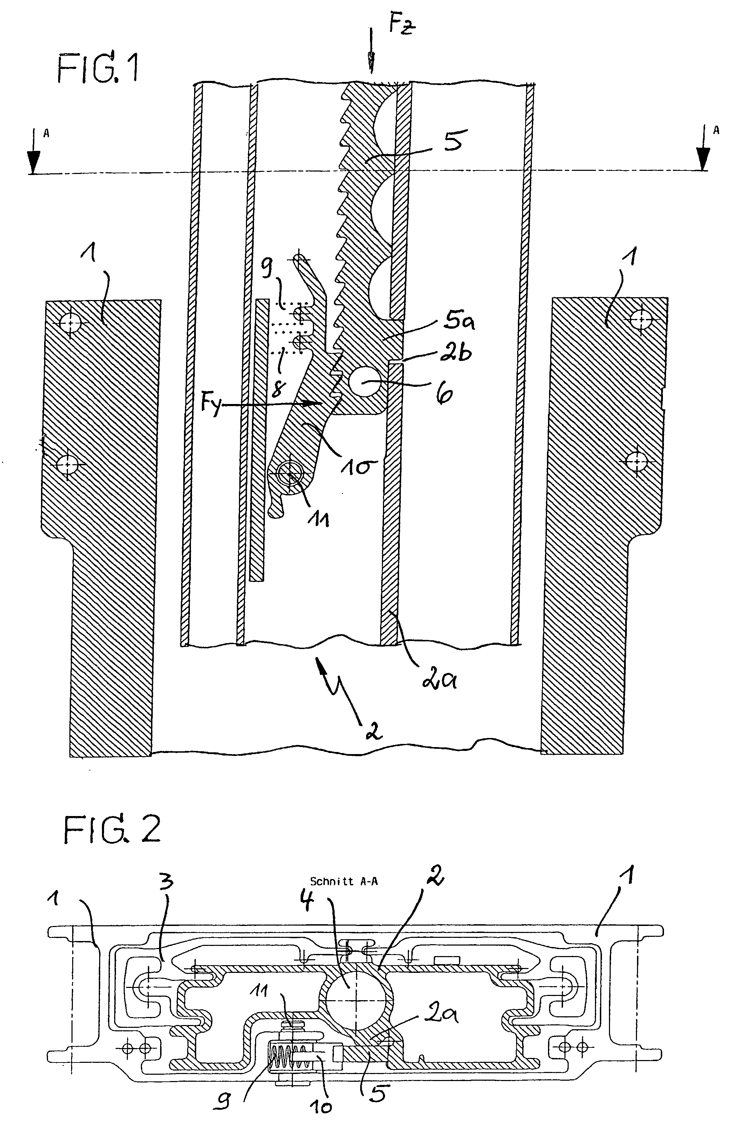

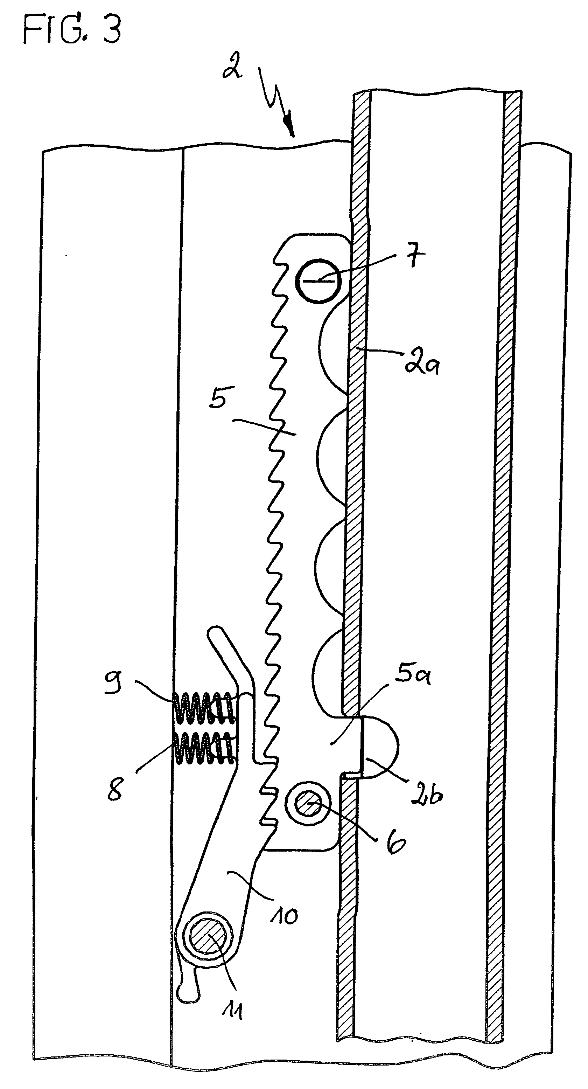

Die Figuren 1 und 2 zeigen in einem ersten Ausführungsbeispiel ausschnittsweise ein Überrollschutzsystem analog demjenigen nach der eingangs zitierten DE 198 38 989 C1, auf die hiermit hinsichtlich der Offenbarung ausdrücklich Bezug genommen wird, mit einem kassettenförmigen, fahrzeugfest angebrachten Profil-Führungskörper 1 zur Führung eines aus einem Kastenprofil bestehenden Profil-Überrollkörpers 2, wobei in dem Profil-Führungskörper 1 zusätzliche Führungs-Elemente 3 angebracht sind. Der Profil-Überrollkörper 2 besitzt eine zentrale Öffnung 4 zur Aufnahme einer (nicht dargestellten) Druckfeder für den Schnellantrieb des Überrollkörpers 1. Ferner ist an einer Wandung 2 a des den Überrollkörper bildenden Kastenprofils in bekannter Weise eine Zahnstange 5 als eine der beiden Verriegelungskomponenten befestigt. Diese Befestigung der Zahnstange 5 ist in der Fig. 3 näher dargestellt. Typischerweise sind zunächst zwei Schraubverbindungen 6, 7 vorgesehen. Ferner besitzt die Zahnstange einen Zapfen 5 a, der in einer Öffnung 2 b der Wandung 2 a formschlüssig aufgenommen ist.

Die zweite Verriegelungskomponente wird in bekannter Weise durch eine mittels Federn 8, 9 vorgespannte Zahnklinke 10 gebildet, die auf einem Bolzen 11, der im Profil-Führungskörper 2 gelagert ist, verschwenkbar gehaltert ist.

Die Figuren 1 und 3 zeigen dabei den verriegelten Zustand des ausgefahrenen Überrollkörpers 2, in dem die Zähne beider Verriegelungskomponenten im verriegelnden Wirkeingriff stehen.

Die Funktion der Verriegelungseinrichtung ist notorisch bekannter Stand der Technik und braucht daher hier nicht näher beschrieben zu werden.

Der Überrollkörper 2, der zugeordnete Führungskörper 1 und dessen Befestigung am Fahrzeug sind so ausgebildet, daß sie, bezogen auch auf die bei einem Überschlag auftretende Maximallast als starres System ausgebildet sind, d.h. keiner Deformation unterliegen. Um zu verhindern, daß die Zahnstange 5, auf welche die auf den Überrollkörper wirkende Kraft Fz voll lastet, von der Wandung 2 a abreißt, weil die Befestigung der Zahnstange aus den eingangs genannten Gründen nicht beliebig verstärkt werden kann, sieht die Erfindung vor, daß die Zahnstange 5, insbesondere der Zapfen 5 a und der Aufnahmebereich des Zapfens um die Öffnung 2 b in der Wandung 2 a herum, als Soll-Deformationsstelle für einen begrenzten Deformationszweck in Verfahrrichtung des Überrollkörpers 2 zum gezielten Energieabbau ausgebildet sind, damit die Zahnstange 5 nicht vollständig von der Wandung 2 a abreißt und die Wiedereinfahrsperre vollständig ihre Wirkung verlieren würde.

Durch die Einleitung der bei einem Überschlag auftretenden Kraft in Fz-Richtung (Fig. 1) wirken durch das Selbstschließmoment der Klinke 10 Kraftkomponenten in Fy- und Fz-Richtung auf die Zahnstange 5.

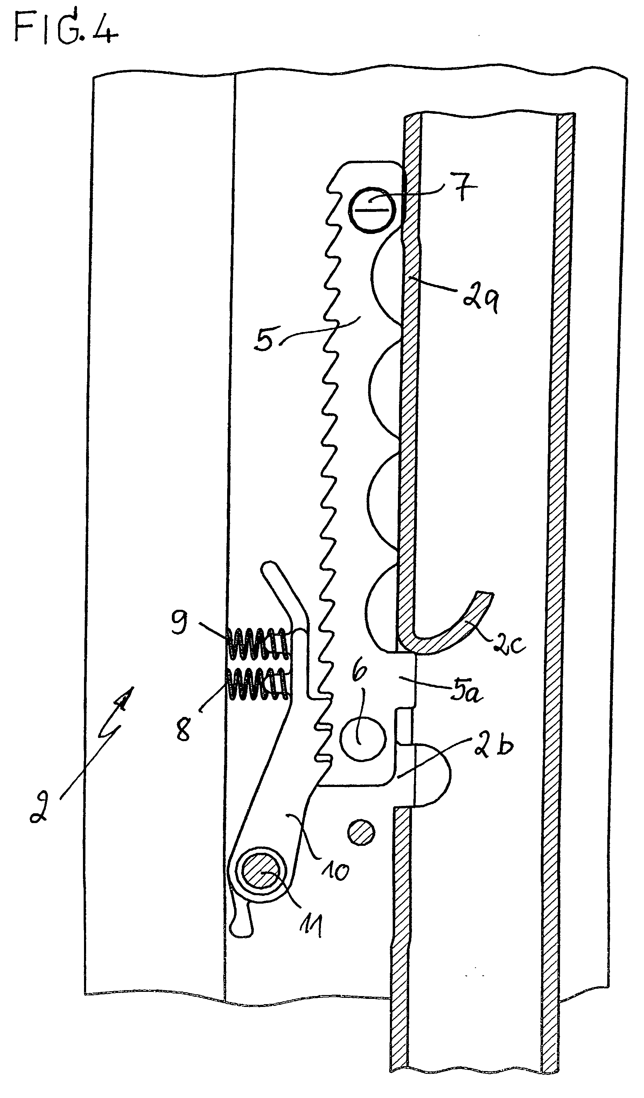

Der Zapfen 5 a und sein Aufnahmebereich in der Wandung 2 a sind nun so gestaltet, daß bei Überschreiten eines bestimmten Kraftniveaus der Komponente Fz durch den Zapfen 5 a ein Einschneiden der Wandung 2 a unter Abschälen eines Spanes 2 c erfolgt, wie es in Fig. 4 dargestellt ist.

Nachdem durch den Energieabbau infolge der Schneid-Verformungsarbeit ein geringeres Kraftniveau erreicht wird, wird der Einschneidvorgang selbsttätig beendet.

Die steuernden Parameter dieses Einschneideffektes sind:
- die Breite des Zapfens 5 a und der Öffnung 2 b, und
- die Wandstärke der einzuschneidenden Wandung 2 a.

Die Parameter sind nun so bestimmt, daß der begrenzte Verformungsweg ca. 10 - 20 mm beträgt. Damit ist sichergestellt, daß in jedem Fall die Schutzfunktion der Wiedereinfahrsperre erhalten bleibt.

Es ist zwar durch die DE 43 14 538 C2 bei einem Überroll-Bügelsystem bekannt geowrden, die Zahnstange zusätzlich über einen Zapfen formschlüssig in der Wandung des Kassettengehäuses zu haltern, jedoch dient dieser Zapfen nur zur zusätzlichen Befestigung neben der Schraubbefestigung. Der Zapfen und der Bereich um die Aufnahmeöffnung in der Wandung sind jedoch nicht so ausgebildet, daß der Zapfen als Schneidwerkzeug für ein Einschneiden der Wandung zwecks eines gezielten Energieabbaues dienen könnte.

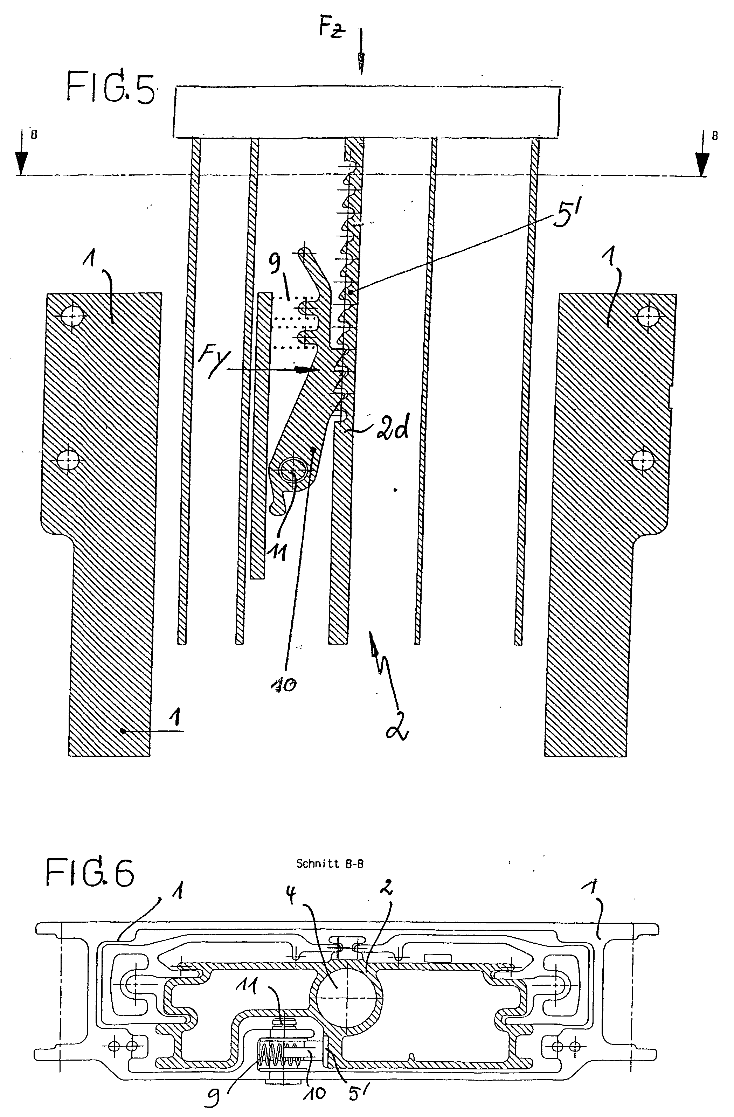

Die Figuren 5 und 6 zeigen eine zweite Ausführungsform, die im Grundsatz mit der ersten Ausführungsform nach den Figuren 1 - 4 übereinstimmt, wie auch die Gleichheit der Bezugszeichen zeigt, mit dem einzigen Unterschied, daß anstelle einer separaten Zahnstange 5 eine integral im Abschnitt 2 d des Überrollkörpers 2 angeformte Zahnleiste 5' vorgesehen ist. Das integrale Anformen einer Zahnleiste an einem Schenkel eines Überrollbügels ist an sich aus der DE 197 12 955 A1 bekannt geworden.

Die Zahnleiste und die Wandstärke des Verzahnungs-Abschnittes 2 d sind so festgelegt, daß es beim Auftreten der eingangs bezeichneten Kraftspitze von 10 oder mehr Tonnen durch die Kraftkompnente Fz zum Einschneiden der Zähne der Zahnleiste 5' und der Verzahnungswand 2 d kommt. Durch dieses Einschneiden wird Energie durch Verformungsarbeit abgebaut. Durch eine progressiv ansteigende Wandstärke kann dabei erreicht werden, daß der Einschneidvorgang nach einer vorgegebenen Strecke selbsttätig zum Stillstand kommt.

In dieser zweiten Ausführungsform bildet daher die speziell dafür ausgelegte Zahnleiste 5' mit der zugehörigen integralen Wand 2 d die Soll-Deformationsstelle.

In den Figuren 1 - 6 sind zwei Ausführungsformen dargestellt, bei denen die mit dem Überrollkörper verbundene Zahnstange 5 bzw. integrale Zahnleiste 5' als Soll-Deformationsstelle ausgebildet sind. In entsprechender Weise kann auch die Zahnklinke 10 bzw. ihre Anlenkung über den Bolzen 11 als Soll-Deformationsstelle ausgebildet sein, insbesondere wenn sie mit dem Überrollkörper verbunden ist und die Zahnstange bzw. Zahnleiste feststeht.

Auch ist es prinzipiell denkbar, beide Verriegelungskomponenten als Soll-Deformationsstellen auszubilden.

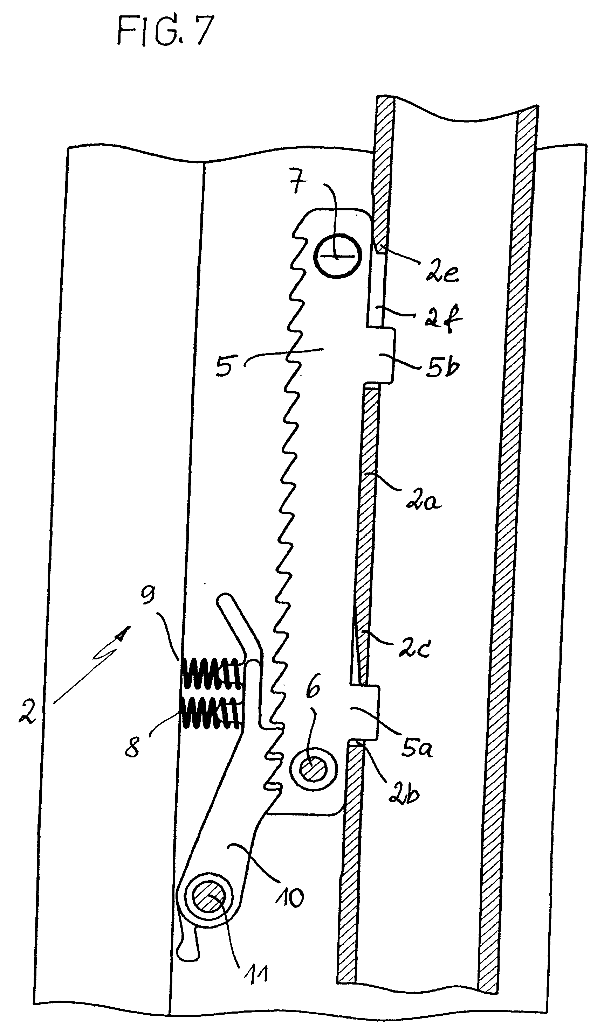

Für die Begrenzung des Deformationsweges, d.h. des Einschneidvorganges, sind weitere Ausführungsformen denkbar. Eine vorteilhafte Variante wird anhand der Figur 7 im folgenden erläutert:

Die Fig. 7 zeigt eine Ausführung eines Überrollschutzsystems mit Soll-Deformationsstelle entsprechend Fig. 1, wobei gleiche Teile mit denselben Bezugszeichen versehen sind, bei der jedoch die Zahnstange 5 einen zweiten Zapfen 5 b aufweist, der in einer zweiten Öffnung 2 f in der Wand 2 a des Überrollkörpers aufgenommen ist. Im Bereich 2 c der Wand 2 a oberhalb des ersten Zapfens 5 a, wo der Einschneidvorgang stattfindet, ist die Wandstärke progressiv ansteigend ausgebildet. Die Öffnung 2 f für den zweiten Zapfen 5 b ist als Langloch mit einer Anschlagkante 2 e ausgebildet. Der Wandbereich 2 c ermöglicht ein leichtes gezieltes Einschneiden, und die Anschlagkante 2 e, auf die nur noch eine reduzierte Kraft wirkt, begrenzt das Einschneiden. Der Wandbereich 2 c kann dabei unterschiedliche geometrische Konfigurationen haben, um einen progressiv ansteigenden Kraftabbau zu gewährleisten. Auch die Ausnutzung der Keilwirkung ist möglich.

## Patentansprüche

1. Überrollschutzsystem für Kraftfahrzeuge, mit
- einem Überrollkörper (2), der in einem fahrzeugfesten Führungskörper (1) geführt aufgenommen ist, und der im Normalzustand gegen die Kraft von mindestens einer vorgespannten Antriebs-Druckfeder durch eine Haltevorrichtung in einer unteren, eingefahrenen Ruhelage haltbar ist, und unter Lösen der Haltevorrichtung durch die Federkraft der Antriebs-Druckfeder in eine obere, schützende Stellung bringbar ist, und mit
- einer Verriegelungseinrichtung (5, 10; 5', 10) für das Verriegeln des ausgefahrenen Überrollkörpers (2) gegen ein ungewolltes Wiedereinfahren, bestehend aus zwei Verriegelungskomponenten, von denen eine fahrzeugfest angebracht und die andere mit dem Überrollkörper verbunden ist, und die Rastelemente besitzen, die in der ausgefahrenen Stellung des Überrollkörpers im verriegelnden Wirkeingriff stehen,
**dadurch gekennzeichnet, daß** der Überrollkörper (2), der zugeordnete Führungskörper (1) und dessen Befestigung am Fahrzeug, bezogen auf die bei einem Überschlag auftretende Maximallast als starres System ausgebildet sind, und mindestens eine Verriegelungskomponente (5, 5') und/oder deren Befestigung am Überroll- bzw. Führungskörper als definierte Soll-Deformationsstelle für einen begrenzten definierten Deformationsweg in Verfahrrichtung des Überrollkörpers zum Energieabbau ausgebildet ist.

2. Überrollschutzsystem nach Anspruch 1, **dadurch gekennzeichnet, daß** die Verriegelungskomponente (5, 5') und/oder deren Befestigung so ausgebildet sind, daß bei Auftreten einer vorgegebenen Last eine schneidende Materialverformung über einen vorgegebenen Weg erfolgt.

3. Überrollschutzsystem nach Anspruch 1 oder 2, mit einer Verriegelungseinrichtung in Form eines mit zahnförmigen Rastelementen versehenen, sich in Verfahrrichtung erstreckenden, länglichen Zahnleistenelementes als eine der Verriegelungskomponenten, **dadurch gekennzeichnet, daß** das Zahnleistenelement (5, 5') und/oder seine Befestigung im Überrollsystem (2) als Soll-Deformationsstelle ausgebildet sind.

4. Überrollschutzsystem nach Anspruch 3, **dadurch gekennzeichnet, daß** das Zahnleistenelement als separate Zahnstange ausgebildet ist, die mit mindestens zwei Schraubverbindungen am Überrollkörper (2) befestigt ist und zusätzlich mit einem zapfenförmigen Fortsatz (5 a) formschlüssig in einer entsprechenden Öffnung (2 b) am Überrollkörper (2) gehaltert ist.

5. Überrollschutzsystem nach Anspruch 4, bei dem der Überrollkörper (2) aus einem Profil-Körper besteht und eine Wandung (2 a) aufweist, an der die Zahnstange (5) befestigt ist, und welche die Öffnung (2 b) zur Aufnahme des zapfenförmigen Fortsatzes (5 a) aufweist, wobei die Wandung (2 a) und der Zapfen (5 a) so ausgelegt sind, daß beim Auftreten einer vorgegebenen Last unter Wirkung des Selbstschließmomentes der anderen Verriegelungskomponente (10) der Zapfen (5 a) als Schneidwerkzeug die Wandung (2 a) für einen vorgegebenen Weg schneidet.

6. Überrollschutzsystem nach Anspruch 3, **dadurch gekennzeichnet, daß** das Zahnleistenelement als Zahnleiste (5') ausgebildet ist, die einstückig am Überrollkörper (2) angeformt ist, wobei die Zahnleiste (5') und die integrale Schnittstelle (2 d) am Überrollkörper (2) so ausgebildet sind, daß beim Auftreten einer vorgegebenen Last die Zähne und die Schnittstelle durch die zweite Verriegelungskomponente 10 geschnitten werden.

7. Überrollschutzsystem nach Anspruch 5 oder 6, **dadurch gekennzeichnet, daß** im Befestigungsbereich der Zahnstange (5) bzw. der Zahnleiste (5') eine progressiv ansteigende Wandstärke am Überrollkörper (2) vorgesehen ist.

8. Überrollschutzsystem nach Anspruch 5 oder 7, **dadurch gekennzeichnet, daß** die Zahnstange (5) einen zweiten zapfenförmigen Fortsatz (5 b) aufweist, der in einer weiteren, langlochartigen Öffnung (2 f) der Wandung (2), die eine Anschlagkante (2 e) zur Begrenzung der Bewegung der Zahnstange (5) bei der vorgegebenen Last besitzt, aufgenommen ist.

## Claims

1. Roll-over protection system for motor vehicles, having
- a roll-over body (2) which is received and guided in a guide body (1) fixed to the vehicle and which, in the normal state, can be held by a retaining device in a lower, retracted, resting position against the force of at least one pre-loaded driving compression spring and, when the retaining device is released, can be brought by the spring force of the driving compression spring into an upper, protecting position, and having
- a locking arrangement (5, 10; 5', 10) for locking the extended roll-over body (2) to prevent unintentional retraction, consisting of two locking components one of which is fixedly mounted on the vehicle and the other is connected to the roll-over body and which have latching elements which are in locking operative engagement in the extended position of the roll-over body,
**characterised in that** the roll-over body (2), the associated guide body (1) and its fastening to the vehicle are constructed as a rigid system in relation to the maximum load occurring in a roll-over, and at least one locking component (5, 5') and/or its fastening to the roll-over body or the guide body is constructed as a defined predetermined deformation site for a limited, defined deformation distance in the direction of movement of the roll-over body for the purpose of dissipating energy.

2. Roll-over protection system according to claim 1, **characterised in that** the locking component (5, 5') and/or its fastening are so constructed that, when a predefined load occurs, a cutting deformation of material takes place over a predefined distance.

3. Roll-over protection system according to claim 1 or 2, having as one of the locking components a locking device in the form of an elongate toothed strip element provided with tooth-shaped latching elements and extending in the direction of movement, **characterised in that** the toothed strip element (5, 5') and/or its fastening in the roll-over system (2) is constructed as a predetermined deformation site.

4. Roll-over protection system according to claim 3, **characterised in that** the toothed strip element is constructed as a separate toothed rack that is fastened to the roll-over body (2) by at least two bolted connections and is additionally held by astud-like lug (5a) in a positive fit in a corresponding aperture (2b) in the roll-over body (2).

5. Roll-over protection system according to claim 4, in which the roll-over body (2) consists of a profile section body and has a wall (2a) to which the toothed rack (5) is fastened and which has the aperture (2b) for receiving the stud-like lug (5a), wherein the wall (2a) and the stud (5a) are so constructed that, when a predefined load occurs, under the action of the self-closing torque of the other locking component (10), the stud (5a), acting as a cutting tool, cuts the wall (2a) for a predefined distance.

6. Roll-over protection system according to claim 3, **characterised in that** the toothed strip element is in the form of a toothed strip (5') that is integrally formed on the roll-over body (2), wherein the toothed strip (5') and the integral cutting site (2d) on the roll-over body (2) are so constructed that, when a predefined load occurs, the teeth and the cutting site are cut by the second locking component 10.

7. Roll-over protection system according to claim 5 or 6, **characterised in that**, in the region where the toothed rack (5) or the toothed strip (5') is fastened, a progressively increasing wall thickness is provided in the roll-over body (2).

8. Roll-over protection system according to claim 5 or 7, **characterised in that** the toothed rack (5) has a second stud-like lug (5b) which is received in a further, slot-like aperture (2f) in the wall (2), which aperture (2f) has a stop edge (2e) to limit the movement of the toothed rack (5) at the predefined load.

## Revendications

1. Système de protection en cas de tonneaux pour véhicules automobiles, avec
- un corps de capotage (2) qui est logé en étant guidé dans un corps de guidage (1) fixé au véhicule, et qui peut être maintenu à l'état normal contre la force d'au moins un ressort de pression d'entraînement précontraint par un dispositif de retenue dans une position de repos rentrée inférieure, et qui peut être amené dans une position de protection supérieure, en dégageant le dispositif de retenue, par l'élasticité des ressorts de pression d'entraînement, et avec
- un dispositif de verrouillage (5, 10 ; 5', 10) pour le verrouillage du corps de capotage (2) sorti contre une rentrée involontaire, composé de deux composants de verrouillage, dont l'un est fixé au véhicule et l'autre est relié au corps de capotage, et qui possèdent les éléments d'enclenchement qui sont en prise active de verrouillage dans la position avancée du corps de capotage,
**caractérisé en ce que** le corps de capotage (2), le corps de guidage (1) associé et sa fixation au véhicule, sur la base de la charge maximale apparaissant lors d'un retournement, sont configurés comme un système rigide, et au moins un composant de verrouillage (5, 5') et/ou sa fixation au corps de capotage et/ou au corps de guidage est configuré comme un point de déformation prévue défini pour une voie de déformation définie limitée dans le sens de déplacement du corps de capotage à des fins de dégradation de l'énergie.

2. Système de protection en cas de tonneaux selon la revendication 1, **caractérisé en ce que** les composants de verrouillage (5, 5') et/ou leur fixation sont configurés de telle sorte que, en cas d'apparition d'une charge prédéfinie, une déformation tranchante des matériaux a lieu sur une distance prédéfinie.

3. Système de protection en cas de tonneaux selon la revendication 1 ou 2, avec un dispositif de verrouillage ayant la forme d'un élément longitudinal en lame dentée, en tant qu'un des composants de verrouillage, s'étendant dans le sens de déplacement et doté d'éléments d'enclenchement dentelés, **caractérisé en ce que** l'élément en lame dentée (5, 5') et/ou sa fixation dans le système de protection en cas de tonneaux (2) sont configurés comme des points de déformation prévue.

4. Système de protection en cas de tonneaux selon la revendication 3, **caractérisé en ce que** l'élément en lame dentée est conçu comme une crémaillère séparée qui est fixée sur le corps de capotage (2) avec au moins deux raccords à vis et qui est maintenue sur le corps de capotage (2) en sus avec un prolongement (5a) en forme d'épaulement par complémentarité de forme dans un orifice (2b) correspondant.

5. Système de protection en cas de tonneaux selon la revendication 4, dans lequel le corps de capotage (2) est formé d'un corps profilé et comprend une paroi (2a) sur laquelle est fixée la crémaillère (5), et qui comprend l'orifice (2b) de logement du prolongement (5a) en forme de goujon, la paroi (2a) et le goujon (5a) étant conçus de façon à ce que, lors de l'apparition d'une charge prédéfinie sous l'action du moment de fermeture automatique des autres composants de verrouillage (10), le goujon (5a), en tant qu'outil de coupe, découpe la paroi (2a) sur une distance prédéfinie.

6. Système de protection en cas de tonneaux selon la revendication 3, **caractérisé en ce que** l'élément en lame dentée est configuré en une lame dentée (5') formée d'une seule pièce sur le corps de capotage (2), la lame coupante (5') et l'interface intégrale (2d) sont configurés sur le corps de capotage (2) pour que, lors de l'apparition d'une charge prédéfinie, les dents et l'interface sont coupés par le second composant de verrouillage 10.

7. Système de protection en cas de tonneaux selon la revendication 5 ou 6, **caractérisé en ce que**, dans la zone de fixation de la crémaillère (5) et/ou de la lame dentée (5'), une épaisseur de paroi augmentant progressivement est prévue sur le corps de capotage (2).

8. Système de protection en cas de tonneaux selon la revendication 5 ou 7, **caractérisé en ce que** la crémaillère (5) comprend un second prolongement (5b) en forme de goujon qui est logé dans un autre orifice oblong (2f) de la paroi (2) qui possède une arête de butée (2e) pour la délimitation du mouvement de la crémaillère (5) lors de la charge prédéfinie.
